Europäisches Patentamt

European Patent Office

Office européen des brevets

(19)

(11) **EP 1 055 105 B1**

(12) **FASCICULE DE BREVET EUROPEEN**

(45) Date de publication et mention
de la délivrance du brevet:
**28.11.2001 Bulletin 2001/48**

(21) Numéro de dépôt: **99900871.7**

(22) Date de dépôt: **08.02.1999**

(51) Int Cl.7: **G01K 13/06**, G01J 5/00

(86) Numéro de dépôt international:
**PCT/CH99/00054**

(87) Numéro de publication internationale:
**WO 99/40400 (12.08.1999 Gazette 1999/32)**

(54) **DISPOSITIF DE MESURE SANS CONTACT ET EN CONTINU DE LA TEMPERATURE D'UN OBJET ALLONGE EN MOUVEMENT CHAUFFE PAR CONTACT**

VORRICHTUNG ZUM KONTAKTLOSEN UND KONTINUIERLICHEN MESSEN DER TEMPERATUR EINES BEWEGTEN LANGGESTRECKTEN, DURCH BERUHRUNG ERWÄRMTEN , OBJEKTS

DEVICE FOR CONTACTLESS AND CONTINUOUS MEASURING OF THE TEMPERATURE OF AN ELONGATED MOVING OBJECT HEATED BY CONTACT

(84) Etats contractants désignés:
**AT BE CH DE DK ES FR GB IE IT LI NL PT SE**

(30) Priorité: **09.02.1998 CH 33498**

(43) Date de publication de la demande:
**29.11.2000 Bulletin 2000/48**

(73) Titulaires:
• **Static Input System S.A.**
**1305 Penthalaz (CH)**
• **Padoy, Jean-Claude**
**1441 Valeyres-sous-Montagny (CH)**

(72) Inventeur: **PADOY, Jean-Claude**
**CH-1441 Valeyres-sous-Montagny (CH)**

(74) Mandataire: **Nithardt, Roland**
**Cabinet Roland Nithardt,**
**Conseils en Propriété Industrielle S.A.,**
**Y-Parc,**
**Rue Galilée 9**
**1400 Yverdon-les-Bains (CH)**

(56) Documents cités:
WO-A-95/27886          DE-A- 1 573 202
FR-A- 1 433 920

## Description

### DOMAINE TECHNIQUE

La présente invention concerne un dispositif de mesure sans contact et en continu de la température d'un objet allongé fin en mouvement axial, en particulier un fil textile, un ruban, un tube ou similaires, chauffé par contact.

### TECHNIQUE ANTERIEURE

Au cours de la fabrication des fils textiles synthétiques, ceux-ci sont soumis à un traitement thermique de retexturation destiné à fixer les caractéristiques physiques dont ils doivent être pourvus selon l'utilisation à laquelle ils sont destinés. Dans cette étape de retexturation, le fil est porté à une température élevée, de l'ordre de 250° C, par passage sur des rouleaux chauffants, puis est étiré et soumis à quelques contraintes de formes avant d'être brutalement refroidi à une température de l'ordre de 80° C, toutes ces opérations se faisant à une vitesse de défilement élevée de l'ordre de 6'000 mètres par minute. Afin d'obtenir de bonnes performances physico-chimiques et mécaniques, la température du fil doit être régulée avec la meilleure précision possible et de préférence avec une précision de l'ordre du dixième de degré.

Cette précision ne peut pas être obtenue dans les installations textiles actuellement utilisées car, dans ces installations, la mesure de la température de référence utilisée est prise sur les rouleaux chauffants. On a constaté que la température réelle du fil diffère de 5 à 10° de cette température de référence, et il est difficile de régler précisément la température des rouleaux ceux-ci présentant une grande inertie.

Les vitesses de défilement des fils en cours de fabrication ou de retexturation devenant de plus en plus rapides et pouvant dépasser 6'000 mètres par minute et même atteindre 10'000 mètres par minute, il devient impératif de disposer de moyens de mesure adaptés à ces vitesses ainsi qu'aux surfaces mesurées dont le diamètre peut aller jusqu'à 0,010 mm.

Il existe de nombreux appareils radiatifs qui permettent de mesurer avec précision la température d'un corps chauffé, sans contact avec ce corps, par mesure du rayonnement échangé entre deux surfaces dont la température, au moins pour l'une d'entre elles, varie en fonction du temps. Cependant ces appareils ne peuvent pas travailler avec des objets dont les dimensions ne permettent pas d'obtenir des spots de mesure dont la surface est au moins égale à 0,5 mm². Or, dans l'industrie textile actuelle, le diamètre des fils actuellement fabriqués peut atteindre 0,05 mm, ce fil étant composé de cinq brins. Si l'on ne peut pas utiliser la pyrométrie optique, il serait possible de mesurer la température réelle du fil par contact à l'aide de thermomètres connus mais aucun de ces appareils actuellement disponibles ne peut travailler en contrôle permanent sur des objets portés à haute température et défilant à haute vitesse.

Le document DE-A-1 573 202 décrit un dispositif pour mesurer la température d'un fil en défilement par/mesure du rayonnement thermique à l'intérieur d'une enceinte entourant le fil.

### EXPOSE DE L'INVENTION

La présente invention se propose de résoudre ce problème en fournissant un dispositif permettant la mesure, de façon permanente, sans contact et avec une grande précision, de la température réelle de fils, câbles, gaines, tresses ou bandes réalisés en matières diverses telles que métalliques, organiques ou des polymères, dont la largeur est comprise entre 0,05 et 5 mm et dont la vitesse de défilement est élevée.

Ce dispositif tel que défini en préambule est caractérisé en ce qu'il comporte au moins un détecteur de flux thermique radiatif et un élément de mesure de la température de ce détecteur de flux thermique, ces composants étant disposés dans une enceinte traversée par ledit objet allongé en mouvement axial, et une unité de traitement des signaux émis par ledit détecteur de flux thermique et ledit élément de mesure de température, cette unité de traitement étant agencée pour calculer la température $T_2$ dudit objet allongé à partir de la formule suivante:

$$T_2 = (W/(\sigma.f.\kappa) + T_1{}^4)^{1/4}$$

dans laquelle

W  représente le flux thermique,
$\sigma$  est la constante de Stefan-Boltzmann,
$f$  est un facteur de forme dépendant des caractéristiques des composants de l'enceinte,
$\kappa$  est un facteur dépendant de la vitesse de défilement du corps allongé,
$T_1$  est la température du détecteur de flux.

Selon une forme de réalisation préférée, le dispositif comporte un corps plein, de forme sensiblement parallélépipédique, agencé pour loger ladite enceinte et ladite unité de traitement.

De préférence, ladite enceinte comporte une forme parallélépipédique et est formée d'une partie de section carrée surmontée d'une partie de section triangulaire rectangle.

D'une façon avantageuse, ledit corps comporte dans une de ses faces une fente agencée pour permettre l'introduction latérale de l'objet allongé à mesurer, ladite fente débouchant dans une cavité de positionnement dudit objet.

Ladite fente est pourvue d'au moins une chicane agencée pour éliminer l'introduction de rayonnements parasites dans ladite enceinte, et la forme géométrique de la cavité de positionnement est définie en fonction du profil de l'objet à mesurer pour permettre le centrage dudit objet dans l'enceinte.

Ladite cavité de positionnement débouche avantageusement dans une paroi latérale longitudinale de la partie de section carrée de l'enceinte afin que l'objet soit positionné au milieu du plan de jonction de ladite partie de section carrée et de la partie de section triangulaire rectangle de l'enceinte.

Dans toutes les formes de réalisation, les parois de ladite fente et de la cavité de positionnement sont pourvues d'un revêtement agencé pour absorber totalement lesdits rayonnements parasites.

Dans la forme de réalisation préférée, les parois de l'enceinte sont pourvues d'un revêtement en un matériau réfléchissant totalement les radiations.

Dans une autre forme de réalisation, les parois de l'enceinte peuvent être pourvues d'un revêtement en un matériau qui diffuse les radiations.

Dans toutes les formes de réalisation, le détecteur de flux thermique est disposé sur le fond de l'enceinte et les dimensions de ce détecteur de flux thermique sont égales aux dimensions du fond de l'enceinte.

Dans toutes les variantes, le dispositif comporte au moins un élément de refroicissement solidaire du corps du dispositif et cet élément de refroicissement est couplé thermiquement au détecteur de flux et à l'enceinte.

## DESCRIPTION SOMMAIRE DES DESSINS

La présente invention sera mieux comprise en référence à la description d'un mode de réalisation préféré et aux dessins annexés donnés à titre d'exemple non limitatif et dans lesquels :

La figure 1 représente une vue latérale du dispositif de mesure selon l'invention,

La figure 2 représente une vue longitudinale en coupe selon la ligne I - I de la figure 1,

La figure 3 représente une vue latérale en coupe selon la ligne II - II de la figure 2, et

La figure 4 représente une vue agrandie d'une partie de la figure 3.

## MEILLEURE MANIERE DE REALISER L'INVENTION

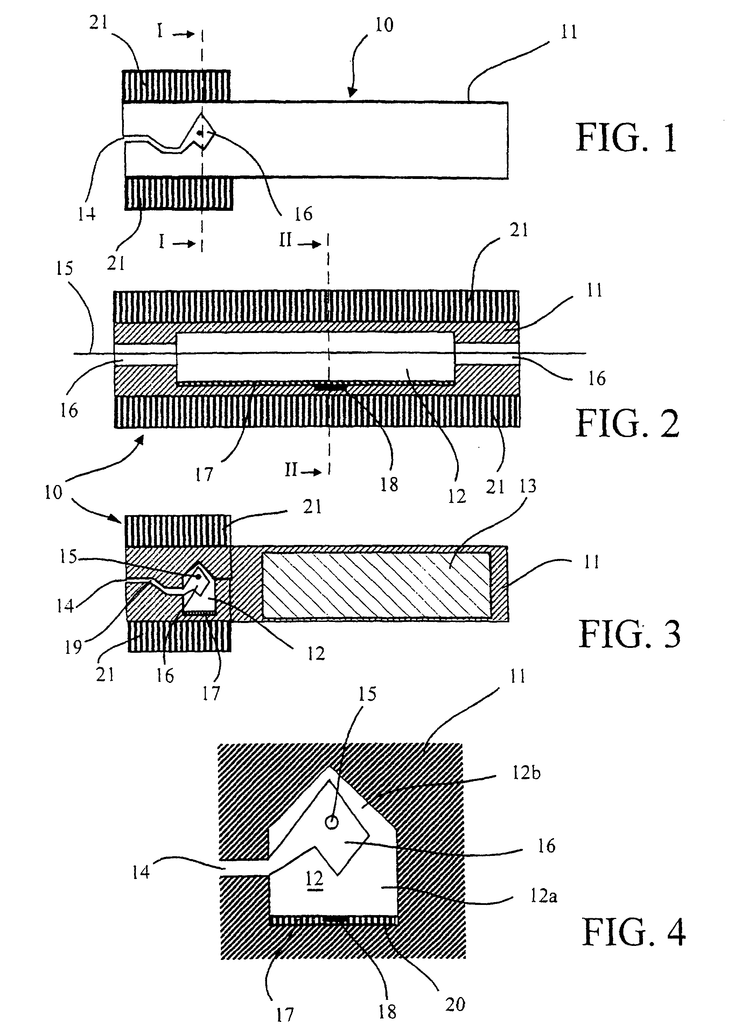

En référence aux figures 1 et 2, le dispositif de mesure 10 comporte un corps métallique plein 11, réalisé par exemple en aluminium, de forme sensiblement parallélépipédique droite, dans lequel sont ménagés une enceinte 12 et un logement pour une unité électronique de traitement de signaux 13. Il est en outre pourvu, sur sa face située du côté de l'enceinte, d'une fente rectiligne longitudinale 14 destinée à l'introduction de l'objet allongé 15 dont on veut mesurer la température. Cette fente débouche respectivement dans une cavité de positionnement 16 de l'objet située de part et d'autre de l'enceinte 12 et, d'autre part, dans la paroi longitudinale de l'enceinte elle-même. Un détecteur de flux thermique 17 dans lequel est intégré un élément de mesure 18 de la température de ce détecteur est disposé dans l'enceinte 12.

La section transversale de la fente d'introduction 14, illustrée par la figure 3, se présente sous la forme d'un conduit non rectiligne pourvu d'au moins une chicane 19, destinée à éliminer l'introduction de rayonnements parasites émis par l'environnement (éclairages, personnes, etc.) dans lequel est placé le dispositif de mesure 10. Pour parfaire cette élimination, les parois de ce conduit sont revêtues d'un matériau à absorption totale.

La forme de la cavité de positionnement 16, qui prolonge cette fente 14 et qui débouche d'un côté dans les parois latérales d'extrémité de l'enceinte 12 et de l'autre côté dans les parois latérales du corps 11, est définie en fonction de la forme de l'objet à mesurer et de sa largeur, si c'est un ruban, ou de son diamètre pour un fil. Elle permet au fil ou au ruban d'être directement positionné au bon endroit dans l'enceinte 12, et d'éviter que ce fil ou ce ruban, s'il entre en résonance lors de vitesses élevées de défilement, touche les parois de l'enceinte aussi bien dans la direction verticale que dans la direction horizontale. Les parois de cette cavité 16 sont également revêtues d'un matériau à absorption totale afin d'éliminer l'introduction de rayonnements parasites.

L'enceinte 12, telle que représentée plus en détail par la figure 4, se présente sous la forme d'une cavité parallélépipédique formée d'une partie de section carrée 12a surmontée d'une partie de section triangulaire rectangle 12b. Les parois de cette enceinte sont recouvertes d'un revêtement à réflexion spéculaire totale ou diffusant. Cette forme particulière de réalisation permet au détecteur de flux thermique 17, qui est disposé sur le fond 20 de cette enceinte et dont les dimensions sont égales à celles de ce fond 20, de recevoir la totalité du rayonnement émis par l'objet se trouvant sensiblement au milieu du plan de jonction des parties 12a et 12b, même si cet objet entre en résonance lors de vitesses de défilement élevées.

Le détecteur de flux thermique radiatif 17 qui équipe le dispositif est connu en soi. Afin d'éliminer notamment les perturbations liées à la présence de la couche d'air froid créée par la vitesse de défilement sur les rouleaux chauffants, le détecteur utilisé est un détecteur de flux thermique à gradient tangentiel. Ce type de détecteur est indépendant de sa température et de celle du support sur lequel il est fixé. De plus il est insensible aux perturbations convectives. L'élément de mesure de température 18, tel qu'un thermocouple, une sonde à résistances ou un dispositif similaire, est intégré à ce détecteur 17 et permet d'en mesurer la température $T_1$.

Afin de garantir son refroidissement et celui du détecteur 17 et éviter toute perturbation thermique, le dispositif de mesure 10 est pourvu d'au moins un élément de refroidissement 21, tel qu'un radiateur à convection naturelle ou forcée ou tout autre système de réfrigération connu, disposé sur le corps 11, en dessus et en dessous de l'enceinte 12. Ce radiateur est couplé thermiquement à ladite enceinte et au détecteur de flux 17.

L'unité électronique de traitement 13 est associée par des moyens connus en soi au détecteur de flux 17 et à l'élément de mesure de température 18. A l'aide d'un logiciel approprié, elle permet de déterminer en continu la température $T_2$ du fil qui traverse l'enceinte à partir des signaux reçus du détecteur de flux thermique 17 et de l'élément de mesure de température 18.

Par nature, le rayonnement du fil est hémisphérique et l'émissivité est fonction d'une part de la direction de ce rayonnement et d'autre part de sa longueur d'onde. Pour éliminer ces différents paramètres, le dispositif utilise une enceinte 12 grise à réflexion totale ou diffusante dont l'émissivité est indépendante de la longueur d'onde et de la directivité de l'émission. La forme caractéristique de cette enceinte, dont la longueur peut être adaptée en fonction de la précision de la mesure désirée afin d'obtenir une plus grande surface de radiation, et la disposition du détecteur du flux, permettent une récupération totale du rayonnement thermique émis par le fil chauffé qui la traverse. Ce flux thermique mesuré W permet d'obtenir la température réelle $T_2$ du fil en appliquant la formule

$$T_2 = (W/(\sigma.f.\kappa) + T_1{}^4)^{1/4}$$

dans laquelle W représente le flux thermique en W/m$^2$ émis par le détecteur 17, $\sigma$ est la constante de Stefan-Boltzman en $W.m._2.K^{-4}$, $f$ est un facteur de forme dépendant des caractéristiques des composants de l'enceinte 12, notamment de sa longueur, de sa forme et de la nature du revêtement dont elle est pourvue, $\kappa$ est un facteur dépendant de la vitesse de défilement du corps allongé et $T_1$ est la température du détecteur de flux 17 en degrés Kelvin.

Le dispositif de mesure ainsi obtenu permet de mesurer d'une façon très précise et permanente la température d'un fil lors de sa fabrication ou de sa retexturation sans perturber les différents éléments de la chaîne, et d'obtenir un fil de meilleure qualité. Les composants utilisés dans ce dispositif de mesure peuvent être modifiés en forme et en caractéristiques sans sortir du contexte de l'invention.

## Revendications

1.  Dispositif de mesure sans contact et en continu de la température d'un objet allongé fin en mouvement axial, en particulier un fil textile, un ruban, un tube ou similaires, chauffé par contact, **caractérisé en ce qu'**il comporte au moins un détecteur de flux thermique radiatif (17) et un élément de mesure (18) de la température de ce détecteur, ces composants étant disposés dans une enceinte (12) traversée par ledit objet allongé (15) en mouvement axial, et une unité de traitement (13) des signaux émis par ledit détecteur de flux thermique et ledit élément de mesure de température, cette unité de traitement étant agencée pour calculer la température $T_2$ dudit objet allongé à partir de la formule suivante :

    $$T_2 = (W/(\sigma.f.\kappa) + T_1{}^4)^{1/4}$$

    dans laquelle

    W   représente le flux thermique,
    $\sigma$   est la constante de Stefan-Boltzmann,
    $f$   est un facteur de forme dépendant des caractéristiques des composants de l'enceinte,
    $\kappa$   est un facteur dépendant de la vitesse de défilement du corps allongé,
    $T_1$   est la température du détecteur de flux.

2.  Dispositif de mesure selon la revendication 1, **caractérisé en ce qu'**il comporte un corps plein (11) de forme sensiblement parallélépipédique agencé pour loger ladite enceinte (12) et ladite unité de traitement (13).

3.  Dispositif de mesure selon la revendication 1, **caractérisé en ce que** ladite enceinte (12) comporte une forme parallélépipédique et est formée d'une partie de section carrée (12a) surmontée d'une partie de section triangulaire rectangle (12b).

4.  Dispositif de mesure selon la revendication 2, **caractérisé en ce que** ledit corps (11) comporte dans une de ses faces une fente (14) agencée pour permettre l'introduction latérale de l'objet allongé à mesurer (15), ladite fente débouchant dans une cavité de positionnement (16) dudit objet.

5.  Dispositif de mesure selon la revendication 4, **caractérisé en ce que** ladite fente (14) est pourvue d'au moins une chicane (19) agencée pour éliminer l'introduction de rayonnements parasites dans ladite enceinte (12).

6.  Dispositif de mesure selon la revendication 4, **caractérisé en ce que** la forme géométrique de ladite cavité de positionnement (16) est définie en fonction du profil de l'objet à mesurer (15) pour permettre le centrage dudit objet dans l'enceinte (12).

7.  Dispositif de mesure selon la revendication 6, **ca-**

**7** EP 1 055 105 B1 **8**

**ractérisé en ce que** ladite cavité de positionnement (16) débouche dans une paroi latérale longitudinale de la partie de section carrée (12a) de l'enceinte afin que l'objet soit positionné au milieu du plan de jonction de ladite partie de section carrée (12a) et de la partie de section triangulaire rectangle (12b) de l'enceinte (12).

**8.** Dispositif de mesure selon les revendications 4 et 5, **caractérisé en ce que** les parois de ladite fente (14) et de la cavité de positionnement (16) sont pourvues d'un revêtement agencé pour absorber totalement lesdits rayonnements parasites.

**9.** Dispositif de mesure selon la revendication 1, **caractérisé en ce que** les parois de l'enceinte (12) sont pourvues d'un revêtement en un matériau réfléchissant totalement les radiations.

**10.** Dispositif de mesure selon la revendication 1, **caractérisé en ce que** les parois de l'enceinte (12) sont pourvues d'un revêtement en un matériau qui diffuse les radiations.

**11.** Dispositif de mesure selon la revendication 1, **caractérisé en ce que** le détecteur de flux thermique (17) est disposé sur le fond (20) de l'enceinte (12).

**12.** Dispositif selon la revendication 11, **caractérisé en ce que** les dimensions du détecteur de flux thermique (17) sont égales aux dimensions du fond (20) de l'enceinte.

**13.** Dispositif selon la revendication 1, **caractérisé en ce qu'**il comporte au moins un élément de refroidissement (21) solidaire du corps (11).

**14.** Dispositif de mesure selon la revendication 13, **caractérisé en ce que** le au moins un élément de refroidissement (21) est couplé thermiquement au détecteur de flux thermique (17) et à l'enceinte (12).

**Claims**

**1.** A device for contactless and continuous measurement of the temperature of a fine elongated object during axial movement, in particular a textile thread, a ribbon, a tube or similar, heated by contact, **characterised in that** it comprises at least one radiative heat flow detector (17) and an element (18) for measuring the temperature of this detector, these components being disposed in an enclosure (12) through which the said elongated object (15) passes during axial movement, and a processing unit (13) for the signals emitted by the said heat flow detector and the said temperature measuring element, this processing unit being designed to calcu-

lated the temperature $T_2$ of the said elongated object from the following formula:

$$T_2 = (W / (\sigma.f.\kappa) + T_1{}^4)$$

in which

W   represents the heat flow,
$\sigma$   is the Stefan Boltzmann constant,
$f$   is a shape factor depending on the characteristics of the components of the enclosure,
$\kappa$   is a factor depending on the unwinding speed of the elongated body,
$T_1$   is the temperature of the heat flow detector.

**2.** A measuring device according to Claim 1, **characterised in that** it comprises a solid body (11) having a substantially parallelepipedic shape designed to house the said enclosure (12) and the said processing unit (13).

**3.** A measuring device according to Claim 1, **characterised in that** the said enclosure (12) has a parallelepipedic shape and is formed by a part having a square section (12a) surmounted by a part having a right-angled triangular section (12b).

**4.** A measuring device according to Claim 2, **characterised in that** the said body (11) comprises in one of its faces a slit (14) designed to allow the lateral introduction of the elongated object to be measured (15), the said slit opening into a cavity (16) for positioning the said object.

**5.** A measuring device according to Claim 4, **characterised in that** the said slit (14) is provided with at least one chicane (19) designed to eliminate the introduction of parasitic radiation into the said enclosure (12).

**6.** A measuring device according to Claim 4, **characterised in that** the geometric shape of the said positioning cavity (16) is defined as a function of the contour of the object to be measured (15) to allow the centring of the said object in the enclosure (12).

**7.** A measuring device according to Claim 6, **characterised in that** the said positioning cavity (16) opens into a longitudinal lateral wall of the portion having a square section (12a) of the enclosure so that the object is positioned in the middle of the joining plane of the said part having a square section (12a) and of the part having a right-angled triangular section (12b) of the enclosure (12).

**8.** A measuring device according to Claims 4 and 5,

**characterised in that** the walls of the said slit (14) and of the positioning cavity (16) are provided with a covering designed to absorb totally the said parasitic radiation.

9. A measuring device according to Claim 1, **characterised in that** the walls of the enclosure (12) are provided with a covering made from a material which totally reflects radiation.

10. A measuring device according to Claim 1, **characterised in that** the walls of the enclosure (12) are provided with a covering made from a material which diffuses radiation.

11. A measuring device according to Claim 1, **characterised in that** the heat flow detector (17) is disposed on the bottom (20) of the enclosure (12).

12. A device according to Claim 11, **characterised in that** the dimensions of the heat flow detector (17) are equal to the dimensions of the bottom (20) of the enclosure.

13. A device according to Claim 1, **characterised in that** it comprises at least one cooling element (21) joined to the body (11).

14. A measuring device according to Claim 13, **characterised in that** the at least one cooling element (21) is thermally coupled to the heat flow detector (17) and to the enclosure (12).

**Patentansprüche**

1. Vorrichtung zum kontaktlosen und kontinuierlichen Messen der Temperatur eines axial bewegten, langgestreckten, feinen Objekts, insbesondere einer Textilfaser, einem Band, einer Hülse oder dergleichen, das durch Berührung erwärmt wird, **dadurch gekennzeichnet, daß** mindestens ein Strahlungswärmeflußsensor (17) und ein Meßelement (18) für die Temperatur des Sensors vorgesehen ist, wobei diese Komponenten in einem geschlossenen Raum (12) angeordnet sind, der von dem axial bewegten, langgestreckten Objekt (15) durchquert wird, sowie eine Verarbeitungseinheit (13) für von dem Wärmeflußsensor und dem Meßelement für die Temperatur ausgegebene Signale, wobei diese Verarbeitungseinheit angeordnet ist, um die Temperatur $T_2$ des langgestreckten Objekts mittels der folgenden Formel zu berechnen:

$$T_2 = (W/(\sigma.f.K)+T_1{}^4)^{1/4}$$

wobei

W    den Wärmefluß darstellt,

$\sigma$    die Stefan-Boltzmann-Konstante ist,

$f$    ein von den Merkmalen der Komponenten des geschlossenen Raumes abhängiger Formfaktor ist,

K    ein von der Durchlaufgeschwindigkeit des langgestreckten Körpers abhängiger Faktor ist,

$T_1$    die Temperatur des Flußsensors ist.

2. Meßvorrichtung nach Anspruch 1, **dadurch gekennzeichnet, daß** sie einen massiven Körper (11) mit nahezu parallelepipedischer Form aufweist, der angeordnet ist, um den geschlossenen Raum (12) und die Verarbeitungseinheit (13) aufzunehmen.

3. Meßvorrichtung nach Anspruch 1, **dadurch gekennzeichnet, daß** der geschlossene Raum (12) eine parallelepipedische Form aufweist und aus einem Teil (12a) mit quadratischem Querschnitt ausgebildet ist, das von einem Teil (12b) mit dreieckigem Querschnitt mit einem rechten Winkel überragt wird.

4. Meßvorrichtung nach Anspruch 2, **dadurch gekennzeichnet, daß** der Körper (11) in einer seiner Seiten einen Schlitz (14) aufweist, der angeordnet ist, um die seitliche Einführung des zu messenden langgestreckten Objekts (15) zu ermöglichen, wobei der Schlitz in einen Positionierungshohlraum (16) des Objekts einmündet.

5. Meßvorrichtung nach Anspruch 4, **dadurch gekennzeichnet, daß** der Schlitz (14) mit mindestens einem Hindernis (19) versehen ist, das angeordnet ist, um die Einleitung parasitärer Strahlungen in den geschlossenen Raum (12) zu beseitigen.

6. Meßvorrichtung nach Anspruch 4, **dadurch gekennzeichnet, daß** die geometrische Form des Positionierungshohlraumes (16) in Abhängigkeit von der Kontur des zu messenden Objekts (15) definiert ist, um die Zentrierung des Objekts in dem geschlossenen Raum (12) zu ermöglichen.

7. Meßvorrichtung nach Anspruch 6, **dadurch gekennzeichnet, daß** der Positionierungshohlraum (16) in eine Längsseitenwand des quadratischen Querschnittes (12a) des geschlossenen Raumes einmündet, damit das Objekt in der Mitte der Verbindungsebene des quadratischen Querschnittes (12a) und des Teils (12b) mit dreieckigem Querschnitt mit einem rechten Winkel des geschlossenen Raumes (12) positioniert wird.

8. Meßvorrichtung nach den Ansprüchen 4 und 5, **dadurch gekennzeichnet, daß** die Wände des Schlitzes (14) und des Positionierungshohlraumes (16) mit einem Belag versehen sind, der zur vollständigen Absorption der parasitären Strahlungen angeordnet ist.

9. Meßvorrichtung nach Anspruch 1, **dadurch gekennzeichnet, daß** die Wände des geschlossenen Raumes (12) mit einem Belag aus einem Material versehen sind, das die Strahlungen vollständig reflektiert.

10. Meßvorrichtung nach Anspruch 1, **dadurch gekennzeichnet, daß** die Wände des geschlossenen Raumes (12) mit einem Belag aus einem Material versehen sind, das die Strahlungen zerstreut.

11. Meßvorrichtung nach Anspruch 1, **dadurch gekennzeichnet, daß** der Wärmeflußsensor (17) auf dem Boden (20) des geschlossenen Raumes (12) angeordnet ist.

12. Meßvorrichtung nach Anspruch 11, **dadurch gekennzeichnet, daß** die Abmessungen des Wärmeflußsensors (17) gleich den Abmessungen des Bodens (20) des geschlossenen Raumes sind.

13. Meßvorrichtung nach Anspruch 1, **dadurch gekennzeichnet, daß** sie mindestens ein mit dem Körper (11) verbundenes Kühlungselement (21) aufweist.

14. Meßvorrichtung nach Anspruch 13, **dadurch gekennzeichnet, daß** das mindestens eine Kühlungselement (21) thermisch mit dem Wärmeflußsensor (17) und dem geschlossenen Raum (12) verbunden ist.

FIG. 1

FIG. 2

FIG. 3

FIG. 4